# EUROPÄISCHE PATENTSCHRIFT

(11) **EP 2 768 297 B1**
(45) Veröffentlichungstag und Bekanntmachung des Hinweises auf die Patenterteilung: **24.04.2019**
(21) Anmeldenummer: 12755856.7
(22) Anmeldetag: 04.09.2012
(51) Int. Cl.: A01D 34/00

(54) **AUTONOMES ARBEITSGERÄT**
AUTONOMOUS IMPLEMENT
ENGIN DE TRAVAIL AUTONOME

(30) Priorität: 19.10.2011 DE 102011084793
(43) Veröffentlichungstag der Anmeldung: 27.08.2014
(73) Patentinhaber: Robert Bosch GmbH, 70442 Stuttgart (DE)
(72) Erfinder: BIBER, Peter, 72119 Poltringen (DE)
(86) Internationale Anmeldenummer: PCT/EP2012/067163
(87) Internationale Veröffentlichungsnummer: WO 2013/056891

(56) Entgegenhaltungen:
- WO-A1-96/38770
- WO-A1-2007/091967
- DE-A1-102008 001 813
- DE-A1-102008 011 947
- US-A- 5 444 965
- US-A1- 2002 156 556

## Beschreibung

### Stand der Technik

Es ist bereits ein autonomes Arbeitsgerät, insbesondere ein autonomer Rasenmäher, mit zumindest einer Recheneinheit, welches dazu vorgesehen ist, eine zu bearbeitende Fläche abzufahren, vorgeschlagen worden. Der Druckschrift WO 96/38770 bezieht sich auf ein autonomes Arbeitsgerät gemäß dem Oberbegriff des Anspruchs 1.

### Offenbarung der Erfindung

Die Erfindung geht aus von einem autonomen Arbeitsgerät, insbesondere einem autonomen Rasenmäher, mit zumindest einer Recheneinheit, welches dazu vorgesehen ist, eine zu bearbeitende Fläche abzufahren.

Es wird vorgeschlagen, dass die Recheneinheit dazu vorgesehen ist, in zumindest einem Betriebszustand zumindest teilweise selbsttätig eine Relokalisierung einzuleiten. Unter einem "autonomen Arbeitsgerät" soll in diesem Zusammenhang insbesondere ein Gerät verstanden werden, welches eine Arbeit zumindest teilweise selbsttätig verrichtet, wie insbesondere selbsttätig beginnt, selbsttätig beendet und/oder selbsttätig zumindest einen Parameter, wie insbesondere einen Streckenparameter, und/oder einen Umkehrpunkt usw. auswählt. Besonders bevorzugt ist das Gerät dazu vorgesehen, eine Fläche abzufahren und insbesondere die Fläche zu bearbeiten, wie beispielsweise zu kehren, abzusaugen, zu reinigen und/oder einen auf der Fläche befindlichen Rasen zu mähen. Dabei sind verschiedene, dem Fachmann als sinnvoll erscheinende autonome Arbeitsgeräte denkbar, wie beispielsweise eine autonome Kehrmaschine, ein autonomer Staubsauger oder eine autonome Schwimmbadreinigungsmaschine usw., insbesondere ist das autonome Arbeitsgerät jedoch von einem autonomen Rasenmäher gebildet. Ferner soll unter einer "Recheneinheit" insbesondere eine Einheit mit einem Informationseingang, einer Informationsverarbeitung und/oder einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine und/oder vorteilhaft in einem gemeinsamen Gehäuse angeordnet. Die Recheneinheit ist vorzugsweise innerhalb eines Teils des autonomen Arbeitsgeräts angeordnet, das zur Verrichtung einer Arbeit angetrieben über die zu bearbeitende Fläche bewegt wird. Alternativ und/oder zusätzlich könnte jedoch auch die Recheneinheit außerhalb des Teils des autonomen Arbeitsgeräts angeordnet sein, wie beispielsweise in einer Fernbedienung und/oder in einer stationären Station. Eine Verbindung zwischen dem Teil des autonomen Arbeitsgeräts und der Recheneinheit des autonomen Arbeitsgeräts kann insbesondere über eine drahtlose Verbindung erfolgen. Dadurch kann insbesondere die Recheneinheit des autonomen Arbeitsgeräts aus dem Teil des autonomen Arbeitsgeräts ausgelagert werden, um eine Belastung durch Schmutz gering zu halten. Ferner kann dadurch ein Gewicht des Teils des autonomen Arbeitsgeräts gering gehalten werden. Unter einer "zu bearbeitenden Fläche" soll in diesem Zusammenhang insbesondere eine Fläche verstanden werden, welche einen Arbeitsbereich definiert. Unter einem "Betriebszustand" soll in diesem Zusammenhang insbesondere ein Zustand des autonomen Arbeitsgeräts verstanden werden, welcher in einem Betrieb des autonomen Arbeitsgeräts auftreten kann. Es sind verschiedene, dem Fachmann als sinnvoll erscheinende Betriebszustände denkbar, insbesondere soll darunter jedoch eine unbekannte Positionsänderung und/oder besonders bevorzugt ein Ortungsfehler verstanden werden. Des Weiteren soll unter einer "Relokalisierung" ein Erfassen einer aktuellen Position nach einem Verlust der Information der aktuellen Position verstanden werden. Vorzugsweise war eine Position in einem vorherigen Betriebszustand bekannt.

Durch die erfindungsgemäße Ausgestaltung des autonomen Arbeitsgeräts kann vorteilhaft ein Positionsverlust und/oder es können andere Störeinflüsse zumindest teilweise selbsttätig behoben werden.

Ferner wird vorgeschlagen, dass die Recheneinheit dazu vorgesehen ist, in zumindest einem Betriebszustand auf der zu bearbeitenden Fläche ein spezifisches Fahrmanöver zur Relokalisierung einzuleiten. Unter einem "spezifischen Fahrmanöver" soll in diesem Zusammenhang insbesondere ein Fahrmanöver mit einer Fahrstrecke verstanden werden, die zumindest teilweise von einer Fahrstrecke bei angenommener vorhandener Information zu einer Position abweicht. Vorteilhaft weist die Fahrstrecke zumindest einen zusammenhängenden Teilbereich auf, der zumindest teilweise einer Außenkante einer zu bearbeitenden Fläche entspricht. Besonders bevorzugt ist der Teilbereich zumindest länger als ein zusammenhängender Teilbereich einer Fahrstrecke entlang der Außenkante der zu bearbeitenden Fläche bei angenommener vorhandener Information zu einer Position in einem regulären Betrieb. Dadurch kann besonders schnell, aus einer beliebigen Position, eine selbsttätige Relokalisierung eingeleitet werden.

Erfindungs-gemäß das autonome Arbeitsgerät eine Erfassungseinheit aufweist, welche zu einer Detektierung zumindest eines Erfassungselements vorgesehen ist. Vorzugsweise ist die Erfassungseinheit zu einer Detektierung eines auf einer Außengrenze der zu bearbeitenden Fläche angeordneten Erfassungselements vorgesehen. Unter einer "Erfassungseinheit" soll in diesem Zusammenhang insbesondere eine Einheit verstanden werden, die dazu vorgesehen ist, zumindest eine Kenngröße und/oder eine physikalische Eigenschaft aufzunehmen und vorzugsweise zumindest teilweise zu verarbeiten, wobei die Aufnahme aktiv, wie insbesondere durch das Erzeugen und Aussenden eines elektrischen Messsignals, und/oder passiv, wie insbesondere durch die Aufnahme eines Signals, stattfinden kann. Unter einem "Erfassungselement" soll in diesem Zusammenhang insbesondere ein Element verstanden werden, das zumindest ein Signal aussendet und/oder durch eine besondere Beschaffenheit durch eine Erfassungseinheit und/oder einen Sensor detektiert werden kann, um eine genaue Position des Erfassungselements und/oder von zumindest einem Teilabschnitt des Erfassungselements zu erfassen. Dadurch kann vorteilhaft einfach und genau eine Außenkante der zu bearbeitenden Fläche selbsttätig von dem autonomen Arbeitsgerät detektiert werden.

Erfindungs-gemäß die Recheneinheit in einem initialen Schritt dazu vorgesehen ist, ein Abfahren einer Außengrenze der zu bearbeitenden Fläche einzuleiten und daraus zumindest teilweise eine Sequenz aus zumindest punktuellen Grenzsignaturen zu speichern. Unter einem "initialen Schritt" soll in diesem Zusammenhang insbesondere ein Schritt verstanden werden, welcher zumindest zu Beginn eines gesamten Betriebs und/oder nach einem Reset-Vorgang durchgeführt wird. Ferner soll in diesem Zusammenhang unter einer "Sequenz" insbesondere eine Aufeinanderfolge von Informationen und/oder Eigenschaften verstanden werden, welche zeitlich und/oder räumlich voneinander getrennt sind. Vorteilhaft ist eine Reihenfolge insbesondere abhängig von einer zeitlichen und/oder räumlichen Abfolge. Des Weiteren soll unter einer "punktuellen Grenzsignatur" in diesem Zusammenhang insbesondere eine oder mehrere Eigenschaften eines Punktes eines Grenzverlaufs und/oder eine oder mehrere Eigenschaftsänderungen eines Punktes des Grenzverlaufs zu einem vorherigen Punkt des Grenzverlaufs verstanden werden. Es sind verschiedene, dem Fachmann als sinnvoll erscheinende Grenzsignaturen denkbar, insbesondere soll darunter jedoch eine Entfernungssignatur, eine visuelle Signatur, eine Bodenbeschaffenheitssignatur, eine Geländeneigungssignatur, eine Orientierungsänderung und/oder besonders vorteilhaft eine Orientierung bzw. Ausrichtung verstanden werden. Dabei soll unter einer "Entfernungssignatur" in diesem Zusammenhang insbesondere eine Signatur verstanden werden, welche zumindest teilweise aus einer Entfernung eines aktuellen Punkts zu einem Bezugspunkt besteht. Der Bezugspunkt kann dabei variabel, wie beispielsweise ein vorheriger Punkt der Signatur aus punktuellen Grenzsignaturen, oder ortsfest sein, wie beispielsweise ein Ort einer Station und/oder ein Startpunkt der Relokalisierung. Ferner soll in diesem Zusammenhang unter einer "visuellen Signatur" insbesondere eine Signatur verstanden werden, welche zumindest teilweise von einer visuellen Aufnahme gebildet ist. Es sind verschiedene, dem Fachmann als sinnvoll erscheinende visuelle Aufnahmen denkbar, wie insbesondere Aufnahmen einer Kamera.

Durch die Ausgestaltung kann vorteilhaft und einfach zumindest teilweise eine Außenkante der zu bearbeitenden Fläche detektiert werden.

Erfindungs-gemäß die Recheneinheit in einem Schritt der Relokalisierung dazu vorgesehen ist, eine Navigationsstrategie einzuleiten, bis von der Erfassungseinheit das zumindest eine Erfassungselement detektiert wird. Vorzugsweise ist die Recheneinheit in einem Schritt der Relokalisierung dazu vorgesehen, eine Navigationsstrategie einzuleiten, bis von der Erfassungseinheit das Erfassungselement der Außengrenze der zu bearbeitenden Fläche detektiert wird. Unter einer "Navigationsstrategie" soll in diesem Zusammenhang insbesondere eine Fahrstrategie verstanden werden, bei welcher auftretenden Ereignissen, wie insbesondere Hindernissen, ein entsprechendes Manöver zugewiesen ist. Vorzugsweise besteht ein Ziel einer entsprechenden Navigationsstrategie insbesondere darin, durch Wählen variabler Wege Hindernisse zu umfahren und eine Außenkante zu erreichen. Dadurch kann vorteilhaft bei einer unbekannten Position eine Außenkante der zu bearbeitenden Fläche angefahren werden.

Erfindungs-gemäß die Recheneinheit in einem Schritt der Relokalisierung dazu vorgesehen ist, ein zumindest teilweises Abfahren des zumindest einen die zu bearbeitende Fläche begrenzenden Erfassungselements einzuleiten und eine daraus entstehende Sequenz aus zumindest punktuellen Grenzsignaturen mit einer gespeicherten Sequenz zu vergleichen. Die gespeicherte Sequenz ist vorzugsweise von einer Sequenz aus punktuellen Grenzsignaturen gebildet. Dadurch kann besonders vorteilhaft und autonom eine Relokalisierung erreicht werden. Ferner kann dadurch eine besonders schnelle Relokalisierung erreicht werden, insbesondere da zwischen den Sequenzen bereits nach einer kurzen Strecke eine 100%ige Übereinstimmung vorliegen kann.

Zudem oder alternativ wäre denkbar, dass die Recheneinheit in einem Schritt der Relokalisierung dazu vorgesehen ist, ein zumindest teilweises Abfahren des Erfassungselements der Außengrenze der zu bearbeitenden Fläche einzuleiten, bis eine Basisstation erreicht wird, dessen Position bekannt ist. Dabei soll unter einer "Basisstation" in diesem Zusammenhang insbesondere eine Station des autonomen Arbeitsgeräts verstanden werden, welche dazu vorgesehen ist, das autonome Arbeitsgerät während einer Ruhephase aufzunehmen. Vorzugsweise ist die Station dazu vorgesehen, einen Energiespeicher des autonomen Arbeitsgeräts aufzufüllen. Ein Auffüllen kann beispielsweise über ein Auftanken, ein Wechseln eines Energieträgers und/oder durch Aufladen eines Akkumulators erfolgen. Es sind jedoch auch andere, dem Fachmann als sinnvoll erscheinende Methoden denkbar. Besonders bevorzugt ist die Station in einem Randbereich der zu bearbeitenden Fläche angeordnet und dient als Start- und/oder Endpunkt für das Teil des autonomen Arbeitsgeräts. Dadurch kann besonders einfach eine Relokalisierung erreicht werden.

Es wird weiter vorgeschlagen, dass das autonome Arbeitsgerät eine Ortungseinheit aufweist, welche dazu vorgesehen ist, eine eigene Position zumindest innerhalb der zu bearbeitenden Fläche zu bestimmen. Unter einer "Ortungseinheit" soll in diesem Zusammenhang insbesondere eine Einheit verstanden werden, welche dazu vorgesehen ist, über externe Einflussgrößen und/oder Informationen eine eigene relative Position in einem Bezugssystem und/oder gegenüber einem Bezugspunkt zu bestimmen. Es sind verschiedene, dem Fachmann als sinnvoll erscheinende Ortungseinheiten denkbar, insbesondere soll darunter jedoch eine Ortungseinheit entsprechend der deutschen Offenlegungsschrift DE 10 2008 011 947 A1, die eine Ortungssensorik und ein Steuermittel umfasst, verstanden werden. Demnach bildet die Beschreibung der Ortungseinheit der Offenlegungsschrift DE 10 2008 011 947 A1 einen Teil der vorliegenden Offenbarung. Dadurch kann vorteilhaft und einfach eine Position bestimmt werden, insbesondere in einer initialen Phase.

Des Weiteren wird ein Verfahren mit einem autonomen Arbeitsgerät, insbesondere mit einem erfindungsgemäßen autonomen Arbeitsgerät, vorgeschlagen, welches dazu vorgesehen ist, eine zu bearbeitende Fläche abzufahren. Das autonome Arbeitsgerät sucht hierbei in einem Schritt der Relokalisierung ein die zu bearbeitende Fläche begrenzendes Erfassungselement und fährt dieses anschließend zumindest teilweise ab, wobei die Recheneinheit eine dabei entstehende Sequenz aus zumindest punktuellen Grenzsignaturen erzeugt und diese mit der gespeicherten Sequenz vergleicht. Dadurch kann vorteilhaft und einfach eine Relokalisierung erreicht werden. Ferner kann dadurch eindeutig eine Position des autonomen Arbeitsgeräts bestimmt werden.

Ferner wäre zudem oder alternativ denkbar, dass das autonome Arbeitsgerät in einem initialen Schritt durch zumindest ein Erfassungselement begrenzte Innengrenzen der zu bearbeitenden Fläche, welche beispielsweise Hindernisse markieren, abfährt und eine Recheneinheit daraus zumindest teilweise eine Sequenz aus zumindest punktuellen Grenzsignaturen speichert. Wird nun in einem Schritt der Relokalisierung ein inneres Erfassungselement detektiert, kann dieses zumindest teilweise abgefahren werden, wobei die Recheneinheit eine dabei entstehende Sequenz aus zumindest punktuellen Grenzsignaturen erzeugt und diese mit der zumindest einen gespeicherten Sequenz vergleicht. Dadurch kann vorteilhaft schnell eine Relokalisierung erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes autonomes Arbeitsgerät in einer schematischen Darstellung,

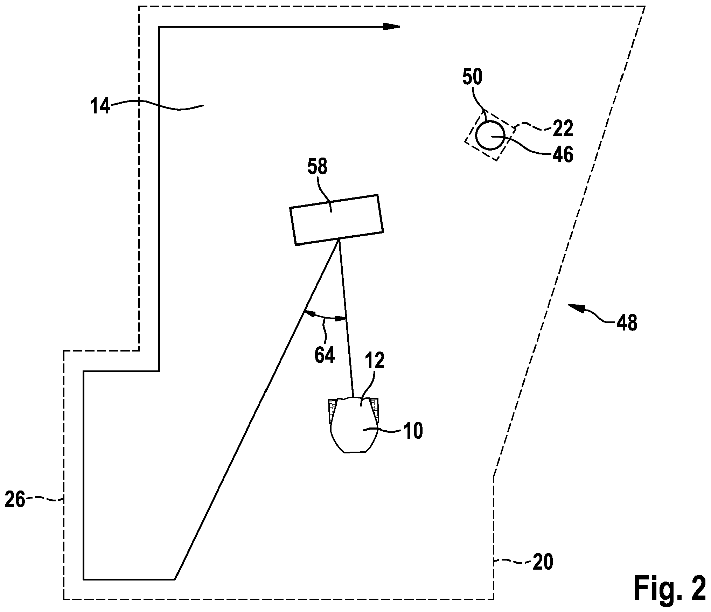

- Fig. 2: das erfindungsgemäße autonome Arbeitsgerät auf einer zu bearbeitenden Fläche während einer Relokalisierung in einer schematischen Darstellung und

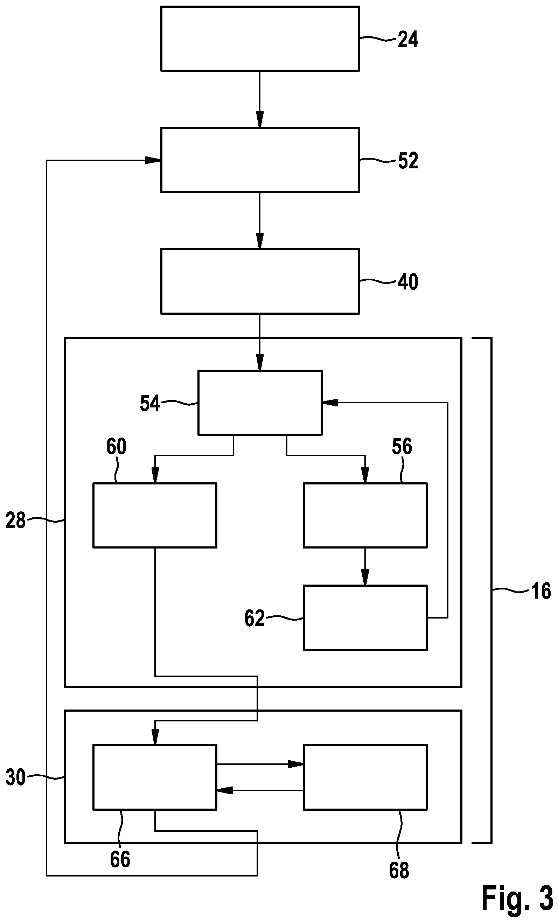

- Fig. 3: einen Ablaufplan des erfindungsgemäßen Arbeitsgeräts in einer schematischen Darstellung.

### Beschreibung des Ausführungsbeispiels

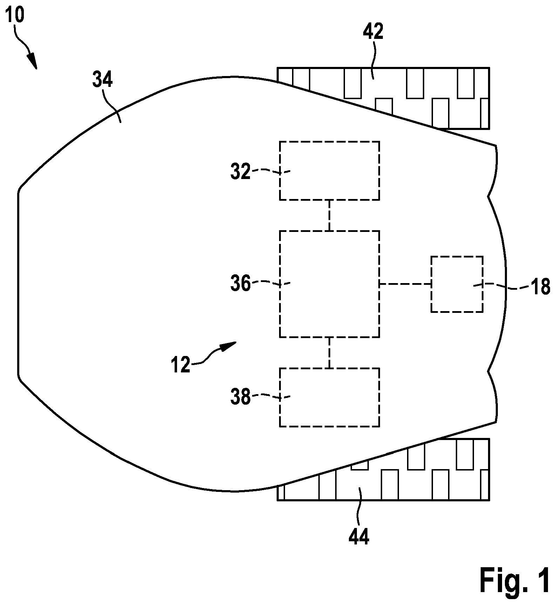

Figur 1 zeigt ein autonomes Arbeitsgerät 10 in einer schematischen Darstellung. Das autonome Arbeitsgerät 10 ist von einem autonomen Rasenmäher gebildet. Das autonome Arbeitsgerät 10 weist eine Recheneinheit 12 auf und ist dazu vorgesehen, eine zu bearbeitende Fläche 14 abzufahren. Die Recheneinheit 12 ist innerhalb eines Gehäuses 34 des autonomen Arbeitsgeräts 10 angeordnet. Die Recheneinheit 12 besteht aus einem Rechenkern 36 und einem Speicherelement 38, wobei der Rechenkern 36 und das Speicherelement 38 über eine Leitung verbunden sind. Die Recheneinheit 12 ist dazu vorgesehen, in einem Betriebszustand selbsttätig eine Relokalisierung 16 einzuleiten. Die Recheneinheit 12 ist dazu vorgesehen, bei einem Ortungsfehler auf der zu bearbeitenden Fläche 14 selbsttätig die Relokalisierung 16 einzuleiten. Wird demnach in einem Schritt 40 ein Ortungsfehler festgestellt, wird die Relokalisierung 16 eingeleitet. Ferner weist das autonome Arbeitsgerät 10 zwei Antriebsräder 42, 44 auf, welche jeweils über einen nicht weiter sichtbaren Elektromotor angetrieben sind. Die Antriebsräder 42, 44 sind an gegenüberliegenden Seiten des Gehäuses 34 des autonomen Arbeitsgeräts 10 angeordnet. Über ein getrenntes Ansteuern der Elektromotoren kann das autonome Arbeitsgerät 10 gesteuert werden.

Des Weiteren ist die Recheneinheit 12 dazu vorgesehen, in einem Betriebszustand auf der zu bearbeitenden Fläche 14 ein spezifisches Fahrmanöver zur Relokalisierung 16 einzuleiten. Die Recheneinheit 12 ist dazu vorgesehen, bei einem Ortungsfehler ein spezifisches Fahrmanöver zur Relokalisierung 16 einzuleiten.

Das autonome Arbeitsgerät 10 weist eine Erfassungseinheit 18 auf, welche zu einer Detektierung von Erfassungselementen 20, 22 vorgesehen ist. Die Erfassungseinheit 18 ist zu einer Detektierung eines auf einer Außengrenze 26 der zu bearbeitenden Fläche 14 angeordneten Erfassungselements 20 vorgesehen. Ferner ist die Erfassungseinheit 18 zu einer Detektierung eines weiteren, eine innere Ausnehmung 46 der zu bearbeitenden Fläche 14 begrenzenden Erfassungselements 22 vorgesehen. Das weitere Erfassungselement 22 begrenzt ein sich auf einem Rasen 48 befindliches stationäres Hindernis 50. Die Erfassungseinheit 18 detektiert dabei eine Position eines direkt in der Nähe liegenden Bereichs eines der Erfassungselemente 20, 22 und damit die Außengrenze 26 der zu bearbeitenden Fläche 14 oder die innere Ausnehmung 46. Die Erfassungseinheit 18 ist in einem den Antriebsrädern 42, 44 zugewandten Bereich des Gehäuses 34 angeordnet und weist einen nicht weiter sichtbaren nach unten gerichteten Sensor auf. Die Erfassungseinheit 18 ist über eine Leitung mit dem Rechenkern 36 der Recheneinheit 12 verbunden. Die zu bearbeitende Fläche 14 bildet einen Teil des Rasens 48. Die Erfassungselemente 20, 22 sind von einem stromdurchflossenen Erfassungsdraht gebildet und sind auf der zu bearbeitenden Fläche 14 auf dem Rasen 48 angeordnet.

Die Recheneinheit 12 ist ferner in einem initialen Schritt 24 dazu vorgesehen, ein Abfahren der Außengrenze 26 der zu bearbeitenden Fläche 14 einzuleiten und daraus eine Sequenz aus punktuellen Grenzsignaturen zu speichern. In dem initialen Schritt 24 fährt das autonome Arbeitsgerät 10 eine Außengrenze 26 der zu bearbeitenden Fläche 14 einmal vollständig ab, dabei wird in regelmäßigen Abständen eine Grenzsignatur von der Recheneinheit 12 detektiert und gespeichert. Die Grenzsignatur ist dabei von einer Ausrichtung des autonomen Arbeitsgeräts 10 sowie von einer relativen Position zu einer vorherigen Grenzsignatur und von einer relativen Position zu einem Bezugssystem gebildet. Die Grenzsignaturen werden von der Recheneinheit 12 entsprechend ihrer zeitlichen Abfolge als Sequenz von Grenzsignaturen in dem Speicherelement 38 der Recheneinheit 12 gespeichert. Ferner werden in dem initialen Schritt 24 auch innere Ausnehmungen 46 abgefahren. Bei einem Abfahren der inneren Ausnehmungen wird in regelmäßigen Abständen eine Grenzsignatur gespeichert. Die Grenzsignaturen werden von der Recheneinheit 12 entsprechend ihrer zeitlichen Abfolge als weitere Sequenz von Grenzsignaturen in dem Speicherelement 38 der Recheneinheit 12 gespeichert. Dabei wird ebenfalls eine Position der inneren Ausnehmung 46 relativ zu der Außengrenze 26 gespeichert. Nach dem initialen Schritt 24 kann ein Schritt 52 eines regulären Betriebs beginnen.

Des Weiteren ist die Recheneinheit 12 in einem Schritt 28 der Relokalisierung 16 dazu vorgesehen, eine Navigationsstrategie einzuleiten, bis von der Erfassungseinheit 18 eines der Erfassungselemente 20, 22 detektiert wird. Im Falle einer Relokalisierung 16 leitet die Recheneinheit 12 eine Navigationsstrategie für das autonome Arbeitsgerät 10 ein. Die Navigationsstrategie ist von einer Zufallsstrategie gebildet. Demnach fährt das autonome Arbeitsgerät 10 bei einem Unterschritt 54 des Schritts 28 der Relokalisierung 16 immer geradeaus, bis es entweder in einem Unterschritt 56 auf ein irreguläres Hindernis 58 trifft oder in einem Unterschritt 60 auf eines der Erfassungselemente 20, 22 trifft. Trifft das autonome Arbeitsgerät 10 in dem Unterschritt 60 auf eines der Erfassungselemente 20, 22 ist der Schritt 28 der Relokalisierung 16 abgeschlossen. Trifft das autonome Arbeitsgerät 10 in dem Unterschritt 56 auf ein irreguläres Hindernis 58, dreht sich das autonome Arbeitsgerät 10 in einem weiteren Unterschritt 62 um einen variablen Winkel 64 und fährt weiter geradeaus. Dieser Vorgang wird so oft wiederholt, bis das autonome Arbeitsgerät 10 auf eines der Erfassungselemente 20, 22 trifft.

Die Recheneinheit 12 ist in einem Schritt 30 der Relokalisierung 16 dazu vorgesehen, ein zumindest teilweises Abfahren eines der die zu bearbeitende Fläche 14 begrenzenden Erfassungselemente 20, 22 einzuleiten und eine daraus entstehende Sequenz aus zumindest punktuellen Grenzsignaturen mit einer gespeicherten Sequenz zu vergleichen. In einem ersten Unterschritt 66 des Schritts 30 der Relokalisierung 16 fährt das autonome Arbeitsgerät 10 eines der die zu bearbeitenden Fläche 14 begrenzenden Erfassungselemente 20, 22 zumindest teilweise ab. In einem zweiten Unterschritt 68 des Schritts 30 der Relokalisierung 16 wird nach und nach eine Sequenz erzeugt und mit den gespeicherten Sequenzen verglichen. Bei dem Erfassungselement 20, 22 kann es sich sowohl um das auf einer Außengrenze 26 der zu bearbeitenden Fläche 14 angeordnete Erfassungselement 20 als auch um das die innere Ausnehmung 46 der zu bearbeitenden Fläche 14 begrenzende Erfassungselement 22 handeln. Die entstehende Sequenz wird mit beiden gespeicherten Sequenzen verglichen. Sobald eine 100%ige Übereinstimmung mit einer der gespeicherten Sequenzen vorliegt, kann das Abfahren abgebrochen werden.

Das autonome Arbeitsgerät 10 weist eine Ortungseinheit 32 auf, welche dazu vorgesehen ist, eine eigene Position zumindest innerhalb der zu bearbeitenden Fläche 14 zu bestimmen. Die Ortungseinheit 32 ist von einer Ortungseinheit entsprechend der deutschen Offenlegungsschrift DE 10 2008 011 947 A1 gebildet, die eine Ortungssensorik und ein Steuermittel umfasst. Die Ortungseinheit 32 ist in einem den Antriebsrädern 42, 44 zugewandten Bereich des Gehäuses 34 angeordnet. Die Ortungseinheit 32 ist über eine Leitung mit dem Rechenkern 36 der Recheneinheit 12 verbunden.

Zu Beginn eines ersten Betriebs wird der initiale Schritt 24 eingeleitet. Das autonome Arbeitsgerät 10 fährt in dem initialen Schritt 24 die Außengrenze 26 der zu bearbeitenden Fläche 14 ab. Die Recheneinheit 12 speichert daraus eine Sequenz aus punktuellen Grenzsignaturen. Die Sequenz wird in dem Speicherelement 38 der Recheneinheit 12 gespeichert. Anschließend wird das Erfassungselement 22 abgefahren, das eine innere Ausnehmung 46 begrenzt. Die Recheneinheit 12 speichert daraus eine weitere Sequenz aus punktuellen Grenzsignaturen.

Anschließend startet in dem nächsten Schritt 52 der reguläre Betrieb. Wird während des Betriebs in dem Schritt 40 ein Ortungsfehler festgestellt, leitet die Recheneinheit 12 die Relokalisierung 16 ein.

In dem ersten Schritt 28 der Relokalisierung 16 startet die Recheneinheit 12 eine Zufallsnavigation des autonomen Arbeitsgeräts 10. Dabei sucht das autonome Arbeitsgerät 10 eines der die zu bearbeitende Fläche 14 begrenzenden Erfassungselemente 20, 22. Das autonome Arbeitsgerät 10 fährt in dem ersten Unterschritt 54 so lange geradeaus, bis es in dem Unterschritt 56 auf ein Hindernis 58 trifft oder die Erfassungseinheit 18 in einem Unterschritt 60 ein Erfassungselement 20, 22 detektiert. Trifft das autonome Arbeitsgerät 10 in dem Unterschritt 56 auf ein Hindernis 58, wird in dem Unterschritt 62 eine Wende um einen variablen Winkel 64 durchgeführt. Anschließend wird wieder der Unterschritt 54 ausgeführt und das autonome Arbeitsgerät 10 fährt wieder geradeaus. Wird in dem Unterschritt 60 von der Erfassungseinheit 18 ein Erfassungselement 20, 22 detektiert, wird der Schritt 28 beendet und es wird der Schritt 30 eingeleitet. In dem ersten Unterschritt 66 des Schritts 30 der Relokalisierung 16 folgt das autonome Arbeitsgerät 10 über die Erfassungseinheit 18 dem zuvor detektierten Erfassungselement 20, 22. Während des Folgens erzeugt die Recheneinheit 12 in einem Unterschritt 68 eine Sequenz aus zumindest punktuellen Grenzsignaturen. Die Sequenz wird dabei nach und nach zusammengesetzt. Die erzeugte Sequenz wird mit beiden gespeicherten Sequenzen verglichen. Sobald eine 100%ige Übereinstimmung mit einer der gespeicherten Sequenzen vorliegt, wird der Unterschritt 66 beendet und ein Vorgang, in dem das autonome Arbeitsgerät 10 dem Erfassungselement 20, 22 folgt, wird abgebrochen. Anschließend wird aus den Informationen der gespeicherten übereinstimmenden Sequenz eine aktuelle Position des autonomen Arbeitsgeräts 10 relativ zu dem Bezugssystem ausgelesen. Der Schritt 52 des regulären Betriebs kann anschließend fortgesetzt werden.

## Patentansprüche

1. Autonomes Arbeitsgerät, insbesondere autonomer Rasenmäher, mit zumindest einer Recheneinheit (12), welches dazu vorgesehen ist, eine zu bearbeitende Fläche (14) abzufahren, wobei die Recheneinheit (12) in einem initialen Schritt (24) dazu vorgesehen ist, ein Abfahren einer Außengrenze (26) der zu bearbeitenden Fläche (14) einzuleiten und daraus zumindest teilweise eine Sequenz aus zumindest punktuellen Grenzsignaturen zu speichern, **dadurch gekennzeichnet, dass** die Recheneinheit (12) dazu vorgesehen ist, nach einem Verlust der Information der aktuellen Position, insbesondere in Folge einer unbekannten Positionsänderung und/oder eines Ortungsfehlers, zumindest teilweise selbsttätig eine Relokalisierung (16) einzuleiten, wobei die Recheneinheit (12) in einem Schritt (30) der Relokalisierung (16) dazu vorgesehen ist, ein zumindest teilweises Abfahren des zumindest einen die zu bearbeitende Fläche (14) begrenzenden Erfassungselements (20, 22) einzuleiten und eine daraus entstehende Sequenz aus zumindest punktuellen Grenzsignaturen mit einer gespeicherten Sequenz zu vergleichen.

2. Autonomes Arbeitsgerät nach Anspruch 1, **dadurch gekennzeichnet, dass** die Recheneinheit (12) dazu vorgesehen ist, nach einem Verlust der Information der aktuellen Position, insbesondere in Folge einer unbekannten Positionsänderung und/oder eines Ortungsfehlers, auf der zu bearbeitenden Fläche (14) ein spezifisches Fahrmanöver zur Relokalisierung (16) einzuleiten.

3. Autonomes Arbeitsgerät nach Anspruch 1 oder 2, **gekennzeichnet durch** eine Erfassungseinheit (18), welche zu einer Detektierung zumindest eines Erfassungselements (20, 22) vorgesehen ist.

4. Autonomes Arbeitsgerät zumindest nach Anspruch 3, **dadurch gekennzeichnet, dass** die Recheneinheit (12) in einem Schritt (28) der Relokalisierung (16) dazu vorgesehen ist, eine Navigationsstrategie einzuleiten, bis von der Erfassungseinheit (18) das zumindest eine Erfassungselement (20, 22) detektiert wird.

5. Autonomes Arbeitsgerät nach einem der vorhergehenden Ansprüche, **gekennzeichnet durch** eine Ortungseinheit (32), weiche dazu vorgesehen ist, eine eigene Position zumindest innerhalb der zu bearbeitenden Fläche (14) zu bestimmen.

6. Autonomes Arbeitsgerät zumindest nach einem der vorhergehenden Ansprüche, **dadurch gekennzeichnet, dass** eine Sequenz eine Aufeinanderfolge von Informationen und/oder Eigenschaften ist, welche zeitlich und/oder räumlich voneinander getrennt sind.

7. Autonomes Arbeitsgerät zumindest nach einem der vorhergehenden Ansprüche, **dadurch gekennzeichnet, dass** eine punktuellen Grenzsignatur eine oder mehrere Eigenschaften eines Punktes eines Grenzverlaufs und/oder eine oder mehrere Eigenschaftsänderungen eines Punktes des Grenzverlaufs zu einem vorherigen Punkt des Grenzverlaufs ist.

8. Autonomes Arbeitsgerät zumindest nach einem der vorhergehenden Ansprüche, **dadurch gekennzeichnet, dass** die Grenzsignatur eine Entfernungssignatur, eine visuelle Signatur, eine Bodenbeschaffenheitssignatur, eine Geländeneigungssignatur, eine Orientierungsänderung und/oder eine Orientierung bzw. Ausrichtung sind.

9. Verfahren mit einem autonomen Arbeitsgerät (10), insbesondere nach einem der vorhergehenden Ansprüche, welches dazu vorgesehen ist, eine zu bearbeitende Fläche (14) abzufahren, wobei das autonome Arbeitsgerät (10) in einem initialen Schritt (24) eine Außengrenze (26) der zu bearbeitenden Fläche (14) abfährt und eine Recheneinheit (12) daraus zumindest teilweise eine Sequenz aus zumindest punktuellen Grenzsignaturen speichert, **dadurch gekennzeichnet, dass** nach einem Verlust der Information der aktuellen Position, insbesondere in Folge einer unbekannten Positionsänderung und/oder eines Ortungsfehlers, auf der zu bearbeitenden Fläche (14) zumindest teilweise selbsttätig eine Relokalisierung (16) eingeleitet wird und wobei das autonome Arbeitsgerät (10)
in zumindest einem Schritt (28, 30) der Relokalisierung (16) ein die zu bearbeitende Fläche (14) begrenzendes Erfassungselement (20, 22) sucht und dieses anschließend zumindest teilweise abfährt, wobei die Recheneinheit (12) die dabei entstehende Sequenz aus den zumindest punktuellen Grenzsignaturen erzeugt und diese mit der gespeicherten Sequenz vergleicht.

## Claims

1. Autonomous implement, particularly an autonomous lawnmower, having at least one computation unit (12) that is provided for the purpose of traveling along an area (14) that is to be treated, wherein the computation unit (12) is, in an initial step (24), provided for the purpose of initiating travel along an outer border (26) of the area (14) that is to be treated and storing, at least to some extent, a sequence of at least punctual border signatures therefrom, **characterized in that** the computation unit (12) is provided for the purpose of initiating relocation (16) at least to some extent automatically following a loss of information for the current position, in particular as a result of an unknown change of position and/or a locating error, wherein the computation unit (12) is, in a step (30) of relocation (16), provided for the purpose of initiating travel at least to some extent along the at least one sensing element (20, 22) that bounds the area (14) that is to be treated and comparing a sequence of at least punctual border signatures that arises therefrom with a stored sequence.

2. Autonomous implement according to Claim 1, **characterized in that** the computation unit (12) is provided for the purpose of initiating a specific travel maneuver for relocation (16) on the area (14) that is to be treated following a loss of information for the current position, in particular as a result of an unknown change of position and/or a locating error.

3. Autonomous implement according to Claim 1 or 2, **characterized by** a sensing unit (18) that is provided for detecting at least one sensing element (20, 22).

4. Autonomous implement according to at least Claim 3, **characterized in that** the computation unit (12) is, in a step (28) of relocation (16), provided for the purpose of initiating a navigation strategy until the sensing unit (18) detects the at least one sensing element (20, 22).

5. Autonomous implement according to one of the preceding claims, **characterized by** a locating unit (32) that is provided for the purpose of determining a position of its own at least within the area (14) that is to be treated.

6. Autonomous implement according to at least one of the preceding claims, **characterized in that** a sequence is a succession of information items and/or properties that are separate from one another in time and/or space.

7. Autonomous implement according to at least one of the preceding claims, **characterized in that** a punctual border signature is one or more properties of a point in a border profile and/or one or more property changes for a point in the border profile in relation to a preceding point in the border profile.

8. Autonomous implement according to at least one of the preceding claims, **characterized in that** the border signature is a distance signature, a visual signature, a surface quality signature, a terrain inclination signature, a change of orientation and/or an orientation or direction.

9. Method using an autonomous implement (10), particularly according to one of the preceding claims, that is provided for the purpose of traveling along an area (14) that is to be treated, wherein the autonomous implement (10), in an initial step (24), travels along an outer border (26) of the area (14) that is to be treated and a computation unit (12), at least to some extent, stores a sequence of at least punctual border signatures therefrom, **characterized in that** relocation (16) is at least to some extent automatically initiated on the area (14) that is to be treated following a loss of information for the current position, in particular as a result of an unknown change of position and/or a locating error, and wherein the autonomous implement (10), in at least one step (28, 30) of relocation (16), searches for a sensing element (20, 22) that bounds the area (14) that is to be treated and then travels at least to some extent along said sensing element, wherein the computation unit (12) produces the sequence of the at least punctual border signatures that arises in the process and compares it with the stored sequence.

## Revendications

1. Engin de travail autonome, en particulier tondeuse à gazon autonome, comportant au moins une unité de calcul (12), laquelle tondeuse à gazon est prévue pour se déplacer sur une surface (14) à traiter, dans lequel, lors d'une étape initiale (24), l'unité de calcul (12) est prévue pour amorcer un déplacement le long d'une limite extérieure (26) de la surface (14) à traiter et, à partir de cela, pour stocker au moins en partie une séquence constituée de signatures de limite au moins par points, **caractérisé en ce que** l'unité de calcul (12) est prévue pour amorcer au moins en partie automatiquement une relocalisation (16) après une perte des informations concernant la position actuelle, en particulier en raison d'un changement de position inconnu et/ou d'une erreur de positionnement, dans lequel, lors d'une étape (30) de relocalisation (16), l'unité de calcul (12) est prévue pour amorcer un déplacement au moins partiel le long dudit au moins un élément de détection (20, 22) délimitant la surface (14) à traiter et pour comparer une séquence de signatures de limite au moins par points ainsi obtenue à une séquence stockée.

2. Engin de travail autonome selon la revendication 1, **caractérisé en ce que** l'unité de calcul (12) est prévue pour amorcer une manoeuvre de conduite spécifique (16) sur la surface (14) à traiter après une perte des informations concernant la position actuelle, en particulier en raison d'un changement de position inconnu et/ou d'une erreur de positionnement.

3. Engin de travail autonome selon la revendication 1 ou 2, **caractérisé par** une unité de détection (18) qui est prévue pour détecter au moins un élément de détection (20, 22).

4. Engin de travail autonome au moins selon la revendication 3, **caractérisé en ce que** l'unité de calcul (12) est conçue, lors d'une étape (28) de relocalisation (16), pour amorcer une stratégie de navigation jusqu'à ce que ledit au moins un élément (20, 22) de détection soit détecté par l'unité (18) de détection.

5. Engin de travail autonome selon l'une des. revendications précédentes, **caractérisé par** une unité de positionnement (32) qui est prévue pour déterminer sa propre position au moins à l'intérieur de la surface (14) à traiter.

6. Engin de travail autonome au moins selon l'une des revendications précédentes, **caractérisé en ce qu'**une séquence est une séquence d'informations et/ou de propriétés qui sont séparées les unes des autres dans le temps et/ou dans l'espace.

7. Engin de travail autonome au moins selon l'une des revendications précédentes, **caractérisé en ce qu'**une signature de limite par points est définie par une ou plusieurs propriétés d'un point d'un parcours de limite et/ou un ou plusieurs changements de propriété d'un point du parcours de limite jusqu'à un point précédent du parcours de limite.

8. Engin de travail autonome au moins selon l'une des revendications précédentes, **caractérisé en ce que** la signature de limite est une signature de distance, une signature visuelle, une signature d'état du sol, une signature de pente du terrain, un changement d'orientation et/ou une orientation ou un cap.

9. Procédé utilisant un engin de travail autonome (10), notamment selon l'une des revendications précédentes, qui est prévu pour se déplacer sur une surface (14) à traiter, dans lequel, lors d'une étape initiale (24), l'engin de travail autonome (10) se déplace le long d'une limite extérieure (26) de la surface (14) à traiter et, à partir de cela, une unité de calcul (12) stocke au moins en partie une séquence constituée de signatures de limite au moins par points, **caractérisé en ce qu'**une relocalisation (16) est amorcée au moins en partie automatiquement sur la surface (14) à traiter après une perte des informations concernant la position actuelle, en particulier en raison d'un changement de position inconnu et/ou d'une erreur de positionnement, et dans lequel, lors d'au moins une étape (28, 30) de relocalisation (16), l'engin de travail autonome (10) recherche un élément de détection (20, 22) délimitant la surface (14) à traiter et se déplace ensuite au moins en partie le long de celui-ci, dans lequel l'unité de calcul (12) génère la séquence qui en résulte à partir des signatures de limite au moins par points et la compare à la séquence stockée.
